# EUROPÄISCHE PATENTSCHRIFT

(11) **EP 4 139 562 B1**
(45) Veröffentlichungstag und Bekanntmachung des Hinweises auf die Patenterteilung: **27.03.2024**
(21) Anmeldenummer: 21722109.2
(22) Anmeldetag: 15.04.2021
(51) Int. Cl.: F01K 13/00

(54) **SYSTEM MIT EINER FLÜSSIGLUFT-ENERGIESPEICHER- UND KRAFTWERKSVORRICHTUNG**
SYSTEM HAVING A LIQUID AIR ENERGY STORAGE AND POWER PLANT APPARATUS
SYSTÈME COMPRENANT UN DISPOSITIF DE PRODUCTION D'ÉLECTRICITÉ ET DE STOCKAGE D'ÉNERGIE À AIR LIQUIDE

(30) Priorität: 21.04.2020 DE 102020110854
(43) Veröffentlichungstag der Anmeldung: 01.03.2023
(73) Patentinhaber: Schwarz, Helmut, 82064 Kleindingharting (DE)
(72) Erfinder: SCHWARZ, Anton, 94036 Passau (DE)
(74) Vertreter: Puschmann Borchert Kaiser Klettner Patentanwälte Partnerschaft mbB
(86) Internationale Anmeldenummer: PCT/EP2021/059819
(87) Internationale Veröffentlichungsnummer: WO 2021/213893

(56) Entgegenhaltungen:
- DE-A1-102015 109 898
- DE-B3-102014 105 237
- US-A1- 2015 300 209

## Beschreibung

Die Erfindung betrifft ein System mit einer Flüssigluft-Energiespeicher- und Kraftwerksvorrichtung gemäß der im Oberbegriff des Patentanspruches 1 angegebenen Art sowie ein Verfahren zum Betreiben dieses Systems.

In vielen Ländern nimmt bei der Stromerzeugung der Anteil des aus Solarenergie und Windkraft gewonnenen Stroms ständig zu. Daher gewinnt die Speicherung von elektrischer Energie immer mehr an Bedeutung. Denn während mit Wasserkraftwerken in Verbindung mit Stauseen elektrische Energie weitgehend bedarfsgerecht erzeugt werden kann und mit Großkraftwerken wie Gas-, Kohle- oder Kernkraftwerken zumindest konstante Leistungen erzeugt werden können, erzeugen Wind- oder Sonnenenergieanlagen elektrischen Strom völlig unabhängig vom Strombedarf nur dann, wenn die Sonne scheint oder der Wind weht. Hierbei wird Solarstrom sogar regelmäßig gegenläufig zum Strombedarf erzeugt. Aktuell werden zum Beispiel in Niedersachsen gewaltige Mengen Windstrom vergeblich produziert, weil das Netz diese Strommengen nicht aufnehmen kann. Windenergie erreichte in Europa 2019 zeitweise die Leistung von 100 Atomkraftwerken.

Stromspeichern in Form von Flüssigluft-Energiespeichern, also die sogenannte LAES-Technologie (englisch: "*Liquid Air Energy Storage",* kurz "*LAES*"), kommt daher in einem solchen Energiesystem eine entscheidende Rolle zu. Der große Vorteil von Flüssigluft-Energiespeichern im Vergleich zu Pumpspeichern ist, dass sie nahezu unabhängig von den örtlichen Gegebenheiten dort installiert werden können, wo sie benötigt werden. Es sind somit keine speziellen geologischen Voraussetzungen und Arbeiten nötig. Pumpspeicherkraftwerke in der Größe von 2 x 150 MW benötigen zudem 10 Jahre Bauzeit. Demgegenüber sind Systeme mit einer Flüssigluft-Energiespeicher- und Kraftwerksvorrichtung nach max. 18 Monaten Auslegungs- und Bauzeit für den Betrieb fertig.

Bei der bekannten Flüssigluft-Energiespeicher- und Kraftwerksvorrichtung wird Umgebungsluft mithilfe von Strom mittels des Linde-Verfahrens verflüssigt, in kryogenen (tiefkalten) Speichertanks gespeichert und bei Bedarf in einer Entspannungsturbine wieder verstromt und einem Stromnetz zugeführt.

Dabei umfasst eine Flüssigluft-Energiespeicher- und Kraftwerksvorrichtung im Wesentlichen drei Hauptkomponenten: eine Ladekomponente, eine Speicherkomponente und eine Entladekomponente. Die Ladekomponente ist in Betrieb, wenn Energie aus nicht benötigtem Strom gespeichert werden soll, also beispielsweise zur Mittagszeit, wenn die Sonne scheint. Mit dem zur Verfügung gestellten Strom wird Umgebungsluft in der Ladekomponente mit Hilfe eines Kompressors komprimiert und durch Expansion auf -190 °C in bekannter Weise durch das Linde-Verfahren oder mit Hilfe einer Expansionsturbine und Bremsgenerator verflüssigt. Anschließend wird die flüssige Luft nahe Umgebungsdruck in einem isolierten Speichertank - Speicherkomponente - gespeichert, und zwar bei einer Dichte von mehr als dem 700-fachen der Umgebungsluft. Wenn wieder mehr Strom gebraucht wird, wird die flüssige Luft durch eine Pumpe auf Druck gebracht, in einer Verdampfungsvorrichtung erwärmt, verdampft und schließlich in der Entladekomponente über eine mit einem Generator verbundene Turbine oder mehrere mit Generatoren verbundenen Turbinen auf Umgebungsdruck entspannt. Über den Generator wird dabei wieder Strom einem Stromnetz zugeführt. Die Leistung der Flüssigluft-Energiespeicher- und Kraftwerksvorrichtung kann gesteigert werden, wenn externe Wärmeenergie bei der Überführung der flüssigen Luft in Druckluft in die Verdampfungsvorrichtung eingekoppelt wird.

Aus der DE 10 2015 109 898 A1 ist bekannt, die Flüssigluft-Energiespeicher- und Kraftwerks-Vorrichtung in ein System mit einem Dampfkraftwerk zu integrieren, um die Abwärme, also die Wärmeenergie, für eine Steigerung der Effektivität der Entladekomponente und somit der Flüssigluft-Energiespeicher- und Kraftwerks-Vorrichtung insgesamt zu nutzen.

Dampfkraftwerke sind jedoch relativ aufwendig und unterliegen hohen Umweltauflagen. Sie können somit nur an ausgesuchten Standorten errichtet werden. Meistens sind die Standorte der Dampfkraftwerke nicht in der Nähe der Windkraftanlagen oder Solarenergieanlagen. Zudem umfasst das in der DE 10 2015 109 898 A1 offenbarte Dampfkraftwerk einen mit fossilem Brenngas betriebenen Boiler, der auch durch den Austausch von sehr hohen und niedrigen Temperaturen sicherheitsrelevante Materialprobleme bekommen kann. Hierbei ist auch zu beachten, dass hochlegierte Stähle nicht für Temperaturen um die -190°C für die Luftverflüssigung ausgelegt sind. Die Effizienz eines solchen Systems sowie die CO₂-Bilanz ist zudem unzureichend.

Aus der US 2015/300209 A1 ist ein gattungsgemäßes System bekannt, welches eine Flüssigluft-Energiespeicher- und Kraftwerks-Vorrichtung mit einer Ladekomponente umfassend einen Kompressor zur Komprimierung von zugeführter Luft sowie einen sich daran anschließenden Verflüssiger zum Verflüssigen der Luft aufeweist. Zudem ist eine Speicherkomponente mit einem Luftspeicher zum Speichern der verflüssigten Luft vorgesehen. Damit wirkt eine Entladekomponente umfassend eine Verdampfungsvorrichtung zur Umwandlung von flüssiger Luft in gasförmige Druckluft sowie eine Expansionsvorrichtung zur Entspannung der Druckluft mit einer Turbine und mit einem an die Turbine angeschlossenen Generator zusammen. Zwischen der Verdampfungsvorrichtung und der Expansionsvorrichtung kann über eine erste Wärmeleitung Wärmeenergie zugeführt werden. Dieses System führt dann bedarfsweise eine Wasserelktrolyse durch, jedoch bei Temperaturen zwischen 100°C und 850°C. Daher ist das Ausgangsprodukt nicht Wasser, sondern Wasserdampf. Weiterhin sind bei diesen Temperaturen bekannte Elektrolyseverfahren mit einem PEM Elektrolyseur oder einer alkalischen Elektrolyse nicht möglich, was einer wirtschaftlichen Umsetzung entgegensteht.

Der Erfindung liegt daher die Aufgabe zugrunde, das aus dem Oberbegriff des Anspruches 1 bekannte System derart weiter zu entwickeln, dass unter Vermeidung der genannten Nachteile auf der einen Seite vergleichsweise kostengünstig Energie gespeichert und wieder entnommen werden kann und auf der anderen Seite externe Energie aus einem energieintensiven Verfahren zur Herstellung weiterer Produkte grüner Technologie verwendet wird.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass durch ein kontinuierliches Elektrolyseverfahren zur Herstellung von Wasserstoff und Sauerstoff fortlaufend Abwärme in einem Bereich von ca. 40°C bis 90°C und somit Wärmeenergie entsteht, welche der benötigten Wärmemenge entspricht, die für den Verdampfungsprozess von flüssiger Luft zu Druckluft optimal ist. Daher kann durch eine Integration eines solchen Elektrolyseverfahrens in das System mit Flüssigluft-Energiespeicher- und Kraftwerksvorrichtung der Gesamtwirkungsgrad erheblich erhöht werden. Hierbei ist weiterhin zu beachten, dass Wasserstoff und auch Sauerstoff mittelfristig zum zentralen Baustein einer sicheren, nachhaltigen und wirtschaftlichen Energieversorgung auf Basis erneuerbarer Energien wird. Die Integration von Power-to-Hydrogen-Systemen wird die Kosten der Energiewende senken und gleichzeitig die Versorgungssicherheit steigern. Zudem ist der Bedarf an Wasserstoff erheblich und steigt zunehmend für unterschiedlichste Anwendungen, auch durch den steigenden Absatz von wasserstoffbetriebenen Fahrzeugen, welche für 500 km ca. 5 kg Wasserstoff benötigen. Derzeit werden jährlich 600 Mrd. Nm³ Wasserstoff in Raffinerien und Petrochemie-Anlagen verbraucht, davon 40 Mrd. Nm³ allein in Deutschland.

Nach der Erfindung ist daher das System mit einer Vorrichtung zur permanenten Wasserelektrolyse mit zumindest einem ersten Wärmetauscher versehen, über den die bei der Elektrolyse entstehende Wärmeenergie durch ein durch den ersten Wärmetauscher strömendes Fluid aufgenommen wird. Dabei ist zumindest eine erste Wärmeleitung vorgesehen, welche die Verdampfungsvorrichtung über das Fluid mit Wärmenergie versorgt. Das Fluid hat dabei eine Temperatur von 40°C bis 90°C bei der Verdampfungsvorrichtung. Der erste Wärmetauscher ist mit der ersten Wärmeleitung so verbunden, dass die bei der Elektrolyse entstehende Wärmeenergie über den ersten Wärmetauscher über das Fluid abgeführt sowie der Verdampfungsvorrichtung zugeführt wird. Auf einfache Weise wird hierdurch die bei der permanenten Elektrolyse, also der H₂- und O₂-Produktion, entstehende Wärmeenergie der Verdampfungsvorrichtung der Flüssigluft-Energiespeicher- und Kraftwerksvorrichtung zugeführt und eingeregelt.

Gemäß einer Ausführungsform der Erfindung ist die Verdampfungsvorrichtung als Wasserbad-Verdampfungsvorrichtung ausgebildet. Eine derartige Wasserbad-Verdampfungsvorrichtung ist letzten Endes ein Wärmetauscher, durch die die erste Wärmeleitung verläuft und die Wärmeenergie über ein Wasserbad zumindest an eine die verflüssigte Luft führende Leitung abgibt. Dabei wird die verflüssigte Luft in gasförmige Druckluft umwandelt. Eine Wasserbad-Verdampfungsvorrichtung zeichnet sich durch ihre robuste und zuverlässige Bauart aus und verfügt über einen großen Kapazitätsbereich.

Derartige Wasserbad-Verdampfungsvorrichtungen sind grundsätzlich bekannt und werden in kryotechnischen Anlagen eingesetzt, um verflüssigte Gase wie Luft, Sauerstoff, Stickstoff, Argon und Erdgas zu verdampfen. Dies geschieht in einem Lastbereich von circa. 500 bis 195.000 Nm³/h. Bis zu drei unterschiedliche Flüssiggasströme können in einer Wasserbad-Verdampfungsvorrichtung bearbeitet werden.

Vorzugsweise sind zwei erste Wärmetauscher vorgesehen, wobei ein erster Wärmetauscher der Sauerstoffgewinnung und ein weiterer erster Wärmetauscher der Wasserstoffgewinnung in der Vorrichtung zur Wasserelektrolyse zugeordnet ist, um die bei der Elektrolyse entstehende Wärmeenergie durch das durch die zwei ersten Wärmetauscher strömende Fluid aufzunehmen. Über die beiden ersten Wärmetauscher soll die Abwärme der Vorrichtung zur permanenten Elektrolyse nahezu vollständig dem Fluid und schlussendlich darüber der Verdampfungsvorrichtung zugeführt werden.

Gemäß einer weiteren Ausführungsform der Erfindung arbeitet die Vorrichtung der Wasserelektrolyse zur Spaltung von Wasserstoff und Sauerstoff mithilfe von elektrischem Strom auf dem Prinzip der Protonen-Austausch-Membran-Elektrolyse (engl.: *"Proton Exchange Membrane"* oder *"Polymer Electrolyte Membrane",* kurz *"PEM")* und ist hierfür ausgelegt. Die Trennung der beiden Halbzellen erfolgt durch eine gasdichte Membran. Der große Vorteil dieser Technologie ist das gute Lastwechselverhalten. Im Vergleich zu anderen Verfahren kann hier schneller auf schwankende Strommengen eingegangen werden. Darüber hinaus ist der Betrieb im Teillastbereich über die gesamte Bandbreite möglich.

Alternativ kann die Vorrichtung zur permanenten Elektrolyse zur H₂- und O₂-Produktion auf dem Prinzip der alkalischen Elektrolyse arbeiten und hierfür ausgebildet sein. Bei der alkalischen Elektrolyse (AEL) werden Metallelektroden in eine alkalische wässrige Lösung eingetaucht. Die Halbzellen, in denen die Elektroden hängen, werden durch eine permeable Membran getrennt. Durch das Anlegen einer Spannung entsteht an der Anode Sauerstoff und an der Kathode Wasserstoff. Die Technologie zeichnet sich durch eine hohe Langzeitstabilität und geringe Investitionskosten aus. Außerdem werden für das Elektrodenmaterial keine seltenen Edelmetalle benötigt. Trotz der einfachen Bauweise erzielen diese Anlagentypen derzeit die höchsten Wirkungsgrade. Besonders im Hinblick auf die Nutzung volatiler Stromangebote besteht jedoch das Problem einer trägen Laständerung und eines relativ geringen Teillastbereichs.

Um den Wirkungsgrad des Systems weiter zu erhöhen, wirkt der Kompressor der Ladekomponente der Flüssigluft-Energiespeicher- und Kraftwerks-Vorrichtung mit zumindest einem zweiten Wärmetauscher zusammen, dessen den zweiten Wärmetauscher durchströmendes Fluid die beim Komprimieren der Luft entstehende Wärmeenergie aufnimmt und in Richtung Verdampfungsvorrichtung abführt.

Hierfür kann der zweite Wärmetauscher über eine zweite Wärmeleitung mit der Verdampfungsvorrichtung verbunden sein, um die beim Komprimieren entstehende Wärmeenergie der Verdampfungsvorrichtung zuzuführen.

Gemäß einer weiteren Ausführungsform der Erfindung ist der Verdampfungsvorrichtung zumindest ein dritter Wärmetauscher nachgeschaltet, über den der Druckluft aus der Verdampfungsvorrichtung weiter Wärmeenergie zugeführt und die erforderliche Temperatur der Druckluft eingestellt werden.

Die Verdampfungsvorrichtung kann dabei über die erste Wärmeleitung und/oder die zweite Wärmeleitung mit dem dritten Wärmetauscher verbunden sein und die verbleibende Wärmeenergie des aus der Verdampfungsvorrichtung austretenden Fluids nutzen, um die Temperatur der Druckluft über den dritten Wärmetauscher einzustellen.

Vorzugsweise ist der dritte Wärmetauscher als Luft-Wasser-Wärmetauscher ausgebildet. Dabei ist der dritte Wärmetauscher mit dem ersten Wärmetauscher über die erste Wärmeleitung verbunden und bildet einen ersten Fluidkreislauf.

Alternativ oder ergänzend kann der dritte Wärmetauscher mit dem zweiten Wärmetauscher über die zweite Wärmeleitung verbunden sein und einen zweiten Fluidkreislauf bilden. Dadurch wird auch die in der Flüssigluft-Energiespeicher- und Kraftwerks-Vorrichtung bereitstehende Wärmeenergie genutzt, um die Effizienz des Gesamtsystems zu erhöhen.

Mit Hilfe des dritten Wärmetauschers soll vorzugsweise die Druckluft auf Umgebungstemperatur erwärmt werden, aber auch die Eintrittstemperatur für den ersten Wärmetauscher der Vorrichtung zur permanenten in der Elektrolyse stattfindenden H₂-und O₂-Produktion für den optimalen Betrieb geregelt werden.

Vorzugsweise können die erste Wärmeleitung und/oder die zweite Wärmeleitung auch Bypässe bei den Wärmetauschern aufweisen, um die Temperatur der Druckluft entsprechend regulieren zu können. Beispielsweise weist die erste Wärmeleitung einen Bypass zur Verdampfungsvorrichtung auf, um einen höheren Anteil an Wärmeenergie dem dritten Wärmetauscher auch direkt zuführen zu können.

Ziel der Auslegung der Wärmetauscher ist eine effektive Wärmebilanz im System. Über die erste Wärmeleitung, die zweite Wärmeleitung und das Fluid wird somit ein einfacher Transport der Wärmeenergie zwischen den einzelnen Komponenten des Systems ermöglicht. Es ist auch möglich, mehrere Verdampfungsvorrichtungen, mehrere erste, zweite und dritte Wärmetauscher sowie diese verbindende Wärmeleitungen somit mehrere Fluidkreisläufe vorzusehen. Dies ist jedoch Gegenstand einer gewünschten Dimensionierung und Optimierung des Systems nach der Erfindung.

Damit der Prozess der Wärmezuführung und somit die Verdampfung von flüssiger Luft in Druckluft kontinuierlich erfolgen kann, ist ein Druckluft-Pufferbehälter in der Entladekomponente der Flüssigluft-Energiespeicher- und Kraftwerks-Vorrichtung vorgesehen.

Die vorstehend genannte Aufgabe wird auch durch ein Verfahren zum Betreiben eines Systems umfassend eine Flüssigluft-Energiespeicher- und Kraftwerks-Vorrichtung und eine Vorrichtung zur permanent in Betrieb befindlichen Elektrolyseanlage gelöst. Das Verfahren ist dabei vorzugsweise anwendbar auf das eben beschriebene System. Gemäß dem Verfahren wird die Wärmeenergie der Abwärme der Vorrichtung zur permanenten Elektrolyse genutzt, um diese einer Verdampfungsvorrichtung einer Entladekomponente der Flüssigluft-Energiespeicher- und Kraftwerks-Vorrichtung für die Umwandlung von verflüssigter in gasförmige Druckluft und elektrische Energie zuzuführen.

Vorzugsweise wird dabei die Wärmeenergie der Abwärme eines Elektrolyseurs der Vorrichtung zur permanenten Elektrolyse verwendet.

Gemäß einer vorteilhaften Weiterbildung der Erfindung kann zusätzlich die Wärmeenergie eines Kompressors zur Komprimierung von zugeführter Luft einer Ladekomponente der Flüssigluft-Energiespeicher- und Kraftwerks-Vorrichtung genutzt werden, um diese der Verdampfungsvorrichtung der Entladekomponente der Flüssigluft-Energiespeicher- und Kraftwerks-Vorrichtung für die Umwandlung von verflüssigter in gasförmige Druckluft zuzuführen.

Gemäß einer weiteren Ausführungsform der Erfindung wird der Verdampfungsvorrichtung der Entladekomponente der Flüssigluft-Energiespeicher- und Kraftwerks-Vorrichtung die Wärmeenergie über ein Fluid zugeführt, insbesondere in Verbindung mit einem ersten Wärmetauscher, der mit einer das Fluid zu- und abführenden Wärmeleitung verbunden ist. Dabei kann das Fluid mit einer Temperatur von 40°C bis 90°C der Verdampfungsvorrichtung zugeführt werden.

Vorzugsweise wird die Wärmeenergie permanent der Verdampfungsvorrichtung der Entladekomponente zugeführt, und in der Verdampfungsvorrichtung wird kontinuierlich verflüssigte in gasförmige Luft umgewandelt und einem Druckluft-Pufferspeicher zugeführt.

Um insbesondere die Lastspitzen im Stromnetz auszugleichen, wird bedarfsweise die gasförmige Druckluft aus dem Druckluft-Pufferspeicher einer Expansionsvorrichtung mit einer Turbine und einem Generator zugeführt. Der vom Generator erzeugte Strom wird einem bestehenden Stromnetz zur Regulierung zugeführt, um Verbrauch und Erzeugung auszupendeln.

Vorzugsweise kann das Fluid der ersten Wärmeleitung vor Eintritt in den ersten Wärmetauscher gekühlt werden, um den Wirkungsgrad der Vorrichtung zur permanenten Wasserelektrolyse zu optimieren.

Vorzugsweise kann auch das Fluid der zweiten Wärmeleitung vor Eintritt in den zweiten Wärmetauscher gekühlt werden.

Insbesondere von Vorteil ist, wenn Energie aus erneuerbaren Energien für die Flüssigluft-Energiespeicher- und Kraftwerks-Vorrichtung und/oder die Vorrichtung zur permanenten Wasserelektrolyse verwendet wird.

Die Erfindung zeichnet sich dadurch aus, dass mittels der optimierter Wärmeenergieübertragung zwischen der Vorrichtung zur kontinuierlichen Wasserelektrolyse und der Entladekomponente der Flüssigluft-Energiespeicher- und Kraftwerks-Vorrichtung der Wirkungsgrad des Systems erhöht wird. Die Aufnahme der Wärmenergie kann bei kontinuierlicher 24-Stunden-H₂- und O₂-Produktion erfolgen. Die Verflüssigung der Luft erfolgt, wenn die Sonne scheint und der Wind bläst. Die Verdampfung der flüssigen Luft zur Energierückgewinnung ist für die Nachtstunden und/oder zu Spitzenlastzeiten vorgesehen.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine schematische Ansicht eines Systems nach einem Ausführungsbeispiel der Erfindung;
- Fig. 2: eine weitere schematische Detailansicht, welche zwei in Reihe geschaltete Wasserbad-Verdampfungsvorrichtungen und einen sich daran anschließenden Luft/Wasserkühler einer Entladekomponente im Zusammenwirken mit zwei Fluidkreisläufen des Systems nach der Erfindung umfasst, und
- Fig. 3: eine weitere schematische Ansicht des modulartigen Aufbaus des Systems nach der Erfindung.

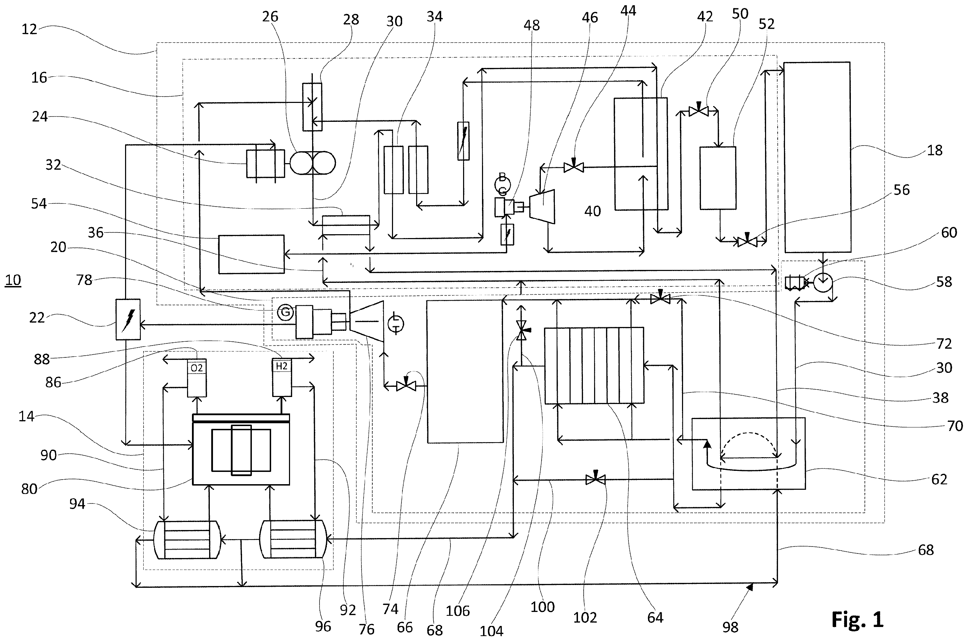

In Fig. 1 ist ein System 10 gemäß einer Ausführungsform der Erfindung dargestellt. Das System 10 umfasst eine Flüssigluft-Energiespeicher- und Kraftwerks-Vorrichtung 12 sowie eine Vorrichtung zur permanenten Wasserelektrolyse 14.

Die Flüssigluft-Energiespeicher- und Kraftwerks-Vorrichtung 12 ist im Wesentlichen mit drei Hauptkomponenten versehen, nämlich einer Ladekomponente 16, einer Speicherkomponente in Form eines Flüssigluftspeichers 18 sowie einer Entladekomponente 20.

Einem Elektromotor 24 der Ladekomponente 16 wird von einem Stromnetz 22 Strom zugeführt, der mit einem Kompressor 26 verbunden ist und diesen bedarfsweise antreibt. Dem Kompressor 26 ist ein Luftansaugfilter 28 vorgeschaltet, über den unter anderem Umgebungsluft dem Kompressor 26 während des Betriebs der Ladekomponente 16 zugeführt wird.

Über eine Luftleitung 30 wird die vom Kompressor 26 komprimierte Luft über einen zweiten Wärmetauscher 32 der Ladekomponente 16 einem Trockner 34 zugeführt. Mithilfe des zweiten Wärmetauschers 32 der Ladekomponente 16 wird der komprimierten und durch die Komprimierung erhitzten Luft Wärmeenergie entzogen. Hierfür ist der zweite Wärmetauscher 32 der Ladekomponente 16 mit einer zweiten Wärmeleitung 36 eines zweiten Fluidkreislaufs 38 zum Abführen von Wärmeenergie verbunden. Hierauf wird später noch eingegangen.

In dem Trockner 34 wird die komprimierte Luft von Wasserdampf, Kohlenwasserstoffen und Kohlenstoffdioxid in bekannter Weise gereinigt.

Die komprimierte Luft wird anschließend einem Luftverflüssiger 40 zugeführt, der einen Wärmetauscher 42, ein Regulierventil 44, eine Expansionsturbine 46 mit daran angeschlossenem Bremsgenerator 48 zur Erzeugung von Strom, ein Entspannungsventil 50 sowie einen Ausgleichsbehälter 52 umfasst. Die komprimierte und getrocknete Luft wird in dem Luftverflüssiger 40 zunächst dem Wärmetauscher 42 zugeführt. In den Wärmetauscher 42 wird ein erster Teilstrom der komprimierten Luft abgezweigt und über das Regulierventil 44 zur Expansionsturbine 46 geführt, in der sich die komprimierte Luft auf Umgebungsdruck entspannt und dabei die Expansionsturbine 46 antreibt. Die Expansionsturbine 46 treibt wiederum den Bremsgenerator 48 an, der Strom erzeugt und diesen über eine elektrischen Schaltzentrale 54 mit Wechselrichter, Trafo usw. dem Stromnetz 22 oder den Verbrauchern des Systems 10, beispielsweise dem Kompressor 26, zuführt.

Die nunmehr stark abgekühlte Luft wird von der Expansionsturbine 46 kommend nunmehr dem Wärmetauscher 42 zugeführt, indem sie dem zweiten Teilstrom erheblich Wärmeenergie entzieht und somit stark abkühlt. Der dadurch erwärmte erste Teilstrom wird über den Trockner 34 wieder zum Luftansaugfilter 28 zurückgeführt und darüber wieder dem Kompressor 26 zugeführt.

Der zweite Teilstrom wird im Wärmetauscher 42 bis kurz vor den Verflüssigungspunkt abgekühlt und anschließend über ein Entspannungsventil 50 geleitet, wo die Luft dann den Verflüssigungspunkt unterschreitet und in den Ausgleichsbehälter 52 gelangt. Über den Ausgleichsbehälter 52 und ein weiteres Regulierventil 56 wird die flüssige Luft dann bei ca. -190°C in den Luftspeicher 18 bei Umgebungsdruck eingebracht. In dem Luftspeicher 18 wird die flüssige Luft gespeichert, bis ein Energiebedarf zum Ausgleich von Spitzenlasten notwendig ist.

Zur Energieentnahme wird flüssige Luft aus dem Luftspeicher 18 über eine Pumpe 58 entnommen, welche durch einen Motor 60 angetrieben wird. Über die Luftleitung 30 wird die flüssige Luft zunächst einer Verdampfungsvorrichtung in Form einer Wasserbad-Verdampfungsvorrichtung 62, anschließend als Druckluft einem dritten Wärmetauscher 64 und schließlich als Druckluft einem Druckluft-Pufferbehälter 66 zugeführt. In der Wasserbad-Verdampfungsvorrichtung 62 wird sowohl über eine erste Wärmeleitung 68 und der zweiten Wärmeleitung 38 Wärmeenergie der Wasserbad-Verdampfungsvorrichtung 62 zugeführt, sodass sich die flüssige Luft in Druckluft umwandelt und dann einen Druck von ca. 40 bar aufweist. Im dritten Wärmetauscher 64 wird die Druckluft auf Umgebungstemperatur oder wärmer erwärmt und anschließend in dem Druckluft-Pufferbehälter 66 gespeichert. Der Prozess der Entnahme der flüssigen Luft aus dem Luftspeicher 18 und des Zuführens von Druckluft kann kontinuierlich erfolgen.

Um die Temperatur der dem Druckluft-Pufferbehälter 66 zugeführten Druckluft einfach einstellen zu können, ist noch eine Bypassleitung 70 vorgesehen, in der ein Bypassventil 72 eingebracht ist. Die Bypassleitung 70 ist mit dem Teil der Luftleitung 30 verbunden, welche die Wasserbad-Verdampfungsvorrichtung 62 mit dem dritten Wärmetauscher 64 verbindet. Zudem ist die Bypassleitung 70 mit dem Teil der Luftleitung 30 verbunden, der den dritten Wärmetauscher 64 mit dem Druckluft-Pufferbehälter 66 verbindet. Auf diese Weise kann kältere Druckluft aus der Wasserbad-Verdampfungsvorrichtung 62 mit wärmerer Druckluft aus dem dritten Wärmetauscher 64 gemischt werden und somit die Temperatur der Druckluft, welche in den Druckluft-Pufferbehälter 66 eingebracht wird, vorbestimmt eingestellt werden.

In dem Druckluft-Pufferbehälter 66 wird die über die Luftleitung 30 zugeführte Druckluft fortlaufend gespeichert, bis beispielsweise zum Ausgleich von Spitzenlasten im Stromnetz 22 Energie benötigt wird. Hierfür ist der Druckluft-Pufferbehälter 66 über ein Druckluftventil 74 und einem weiteren Teil der Luftleitung 30 mit einer Hauptturbine 76 mit angeschlossenem Stromgenerator 78 verbunden. In der Hauptturbine 76 entspannt sich die Druckluft von ca. 40 bar auf Umgebungsdruck und treibt dabei die Hauptturbine 76 mit dem daran angeschlossenen Stromgenerator 78 zur Stromerzeugung an. Der erzeugte Strom wird zur Regulierung dem Stromnetz 22 zugeführt.

Die Vorrichtung zur permanenten Wasserelektrolyse 14 besteht aus mehreren PEM 80-Elektrolyseuren, welche an das Stromnetz 22 angeschlossen sind und hierüber die elektrische Energie zur permanenten Wasserelektrolyse für die H₂- und O₂-Produktion erhalten. Die PEM 80 produzieren fortlaufend täglich 24h lang mindestens 7000 - 8000 Stunden im Jahr Wasserstoff und Sauerstoff. Der Sauerstoff wird einem Sauerstoff-Speicherbehälter 88 und der Wasserstoff einem Wasserstoff-Speicherbehälter 86 zugeführt und bedarfsweise in bekannter Weise weiterverarbeitet oder weitergeleitet. Die bei der Sauerstoffherstellung sowie die bei der Wasserstoffherstellung entstehende Wärmeenergie wird durch Fluidkreisläufe 90, 92 abgeführt und über einen Wärmetauscher 94, der dem Fluidkreislauf 90 der Sauerstoffgewinnung zugeordnet ist, und über einen Wärmetauscher 96, der dem Fluidkreislauf 92 der Wasserstoffgewinnung zugeordnet ist, abgeführt.

Die erste Wärmeleitung 68 verbindet die beiden ersten Wärmetauscher 94 und 96 miteinander und nimmt die Wärmeenergie durch das in der Wärmeleitung 68 strömende Fluid aus den Fluidkreisläufen 90 und 92 auf.

Die Wärmeleitung 68 bildet einen ersten Fluidkreislauf 98. Hierbei verläuft die Wärmeleitung 68 von den beiden ersten Wärmetauschern 94, 96 zu der Wasserbad-Verdampfungsvorrichtung 62, um dort die in dem Fluid der Wärmeleitung 68 gespeicherte Wärmeenergie an ein Wasserbad abzugeben, darüber wieder die verflüssigte Luft der Luftleitung 30 zu erwärmen und zum Verdampfen zu bringen.

Weiterhin verläuft die Wärmeleitung 68 von der Wasserbad-Verdampfungsvorrichtung 62 zu dem dritten Wärmetauscher 64 und zu den beiden ersten Wärmetauschern 94 und 96 zurück. Der erste durch die erste Wärmeleitung 68 gebildete Fluidkreislauf 98 ist somit geschlossen.

Zudem ist eine Bypassleitung 100 mit einem Bypassventil 102 des ersten Fluidkreislaufs 98 vorgesehen, welche unter Umgehung des dritten Wärmetauschers 64 die erste Wärmeleitung 68 kurzschließt. Auf einfache Weise kann hierüber die Wärmeenergie eingestellt werden, welche der Druckluft in der Luftleitung 30 von dem Fluid der ersten Wärmeleitung 68 über den dritten Wärmetauscher 64 zugeführt werden soll.

Zudem ist eine Ausgleichsleitung 104 mit einem Ausgleichsventil 106 vorgesehen, welche den Teil der ersten Wärmeleitung 68 nach dem dritten Wärmetauscher 64 mit dem Teil der zweiten Wärmeleitung vor dem zweiten Wärmetauscher 32 verbindet. Hierdurch soll Fluid der ersten Wärmeleitung 68 des ersten Fluidkreislaufs 98 zur zweiten Wärmeleitung 36 des zweiten Fluidkreislaufs 38 überführt und somit Wärmeenergie des ersten Fluidkreislaufs 98 in den zweiten Fluidkreislauf 38 eingebracht werden. Dies dient dazu, die Rücklauf-Temperatur der zweiten Wärmeleitung 36 bei Betrieb der Ladekomponente 16 zu regulieren.

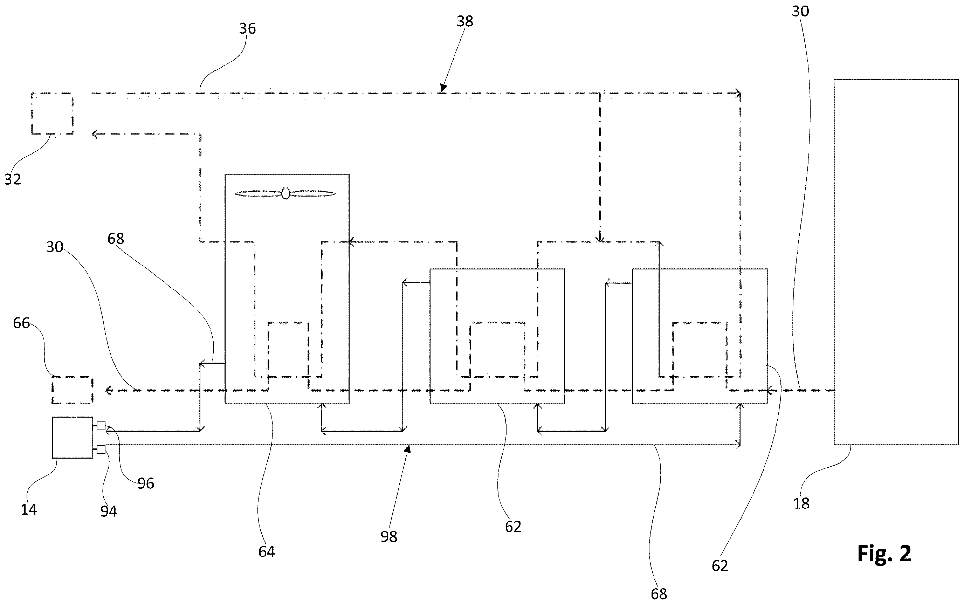

In Figur 2 sind in einer schematischen Ansicht im Wesentlichen der erste Fluidkreislauf 98 und der zweite Fluidkreislauf 38 dargestellt. Die einzelnen Komponenten weisen die anhand von Fig. 1 beschriebenen Bauteile des Systems 10 auf. Sie sind jedoch aus Gründen der Übersicht bei Fig. 2 weggelassen worden.

Die erste Wärmeleitung 68 verläuft von den ersten Wärmetauschern 94, 96 der Vorrichtung zur permanenten Wasserstoffelektrolyse 14 zu zwei in Reihe geschalteten Wasserbad-Verdampfungsvorrichtungen 62a, 62b, dann zu dem dritten Wärmetauscher 64 in Form eines Luft/Wasserkühlers und schließlich zurück zu den ersten Wärmetauschern 94, 96. Die Bypassleitung 100 mit dem Bypassventil 102, aber auch die Ausgleichsleitung 104 mit dem Ausgleichsventil 106 sind aus Gründen der Übersicht hier nicht dargestellt.

Die zweite Wärmeleitung 36 verläuft von dem zweiten Wärmetauscher 32 beim Kompressor 26 zu der ersten Wasserbad-Verdampfungsvorrichtung 62a, anschließend zu der zweiten Wasserbad-Verdampfungsvorrichtung 62b, dann zu dem dritten Wärmetauscher 64 und zurück zu dem zweiten Wärmetauscher 32.

Zudem ist der Luftspeicher 18 mit der Luftleitung 30 dargestellt. Diese verläuft von dem Luftspeicher 18 über die beiden Wasserbad-Verdampfungsvorrichtungen 62a, 62b über den dritten Wärmetauscher 64 zu dem Druckluft-Pufferbehälter 66.

In dem dritten Wärmetauscher 64 ist ein Ventilator vorgesehen, um das Fluid der ersten Wärmeleitung 68 vor Eintritt in den ersten Wärmetauscher 94, 96 und das Fluid der zweiten Wärmeleitung 36 vor Eintritt in den zweiten Wärmetauscher 32 zu kühlen.

Hieraus wird deutlich, dass die Abwärme der Vorrichtung zur permanenten Wasserstoffelektrolyse 14 sowie die Abwärme des Kompressor 26 genutzt wird, um diese als Wärmeenergie der Entladekomponente 20 über die Wasserbad-Verdampfungsvorrichtungen 62a, 62b und den dritten Wärmetauscher 64 kontinuierlich in einem 24-Stunden- und 7-Tage-Betrieb zuzuführen.

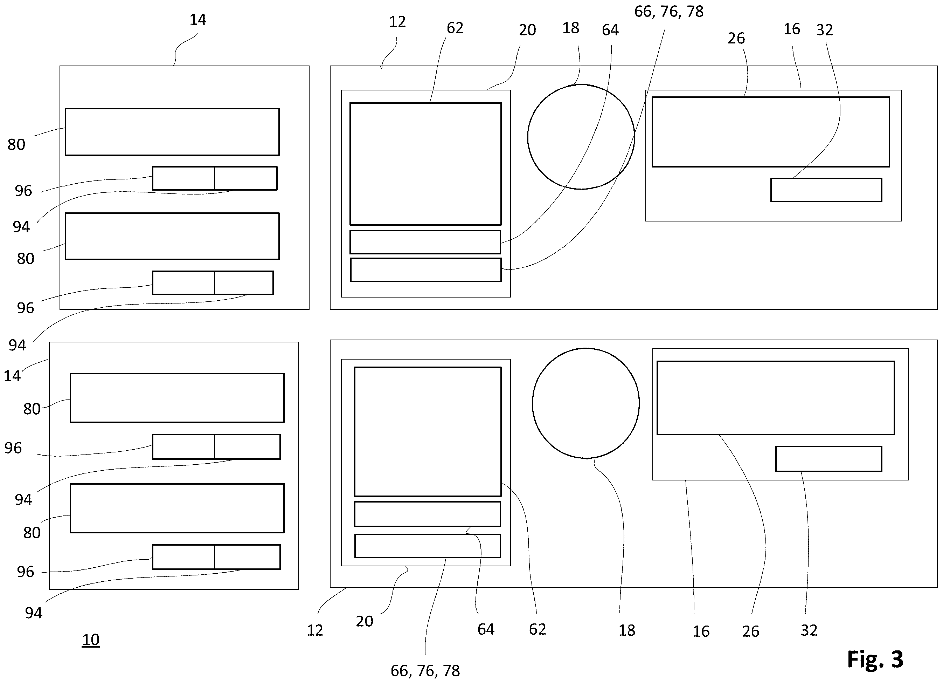

In Fig. 3 ist schematisch der grundsätzliche Aufbau des anhand der Fig. 1 und 2 beschriebenen Systems 10 dargestellt. Dieses System 10 zeigt zwei parallel zueinander angeordnete flüssige Luft-Energiespeicher- und Kraftwerks-Vorrichtungen 12.

Des Weiteren zeigt Fig.3 vier Elektrolyseure 80 mit je 24 Vorrichtungen zur permanenten Wasserelektrolyse 14, welche modulartig aufgebaut sind und bei Bedarf erweitert werden können. Diese Elektrolyseure 80 für die permanente Wasserstoff- und Sauerstoff-Produktion wirken mit den Wärmetauschern 94 und 96 zusammen.

Die flüssige Luft-Energiespeicher- und Kraftwerks-Vorrichtung 12 umfasst die Ladekomponente 16, den Luftspeicher 18 und die Entladekomponente 20 mit der Wasserbad-Verdampfungsvorrichtung 62, mit dem dritten Wärmetauscher 64, mit dem Druckluft-Pufferbehälter 66 und mit der Hauptturbine 76 mit dem Stromgenerator 78. Dies ist alles nur schematisch dargestellt, um die Modulbauweise zu veranschaulichen. Zudem umfasst die flüssige Luft-Energiespeicher- und Kraftwerks-Vorrichtung 12 sowie die Vorrichtung zur permanenten Wasserstoffelektrolyse 14 auch sämtliche anhand von Fig. 1 beschriebenen Merkmale.

Ein Elektrolyseur 80 produziert, bei einem Energiebedarf von 17,5 MW, derzeit 8160 kg Wasserstoff pro Tag. Er gibt dabei 4 MWh Wärme über die Wärmetauscher 94, 96 an die Wasserbad-Verdampfungsvorrichtung 62 über den ersten Fluidkreislauf 98 über das in der ersten Wärmeleitung 68 fließende Fluid ab.

Die Wasserbad-Verdampfungsvorrichtung 62 umfasst beispielsweise 400 m³ Wasserbad, welches 18,6 MWh benötigt, um von 10°C auf 50°C aufgeheizt zu werden. Über die Pumpe 58 und die zugehörige luftbeheizte Wasserbad-Verdampfungsvorrichtung 62 werden 40 m³/h flüssige Luft in die Wasserbad-Verdampfungsvorrichtung 62 eingeführt, dabei 28.000 Nm³/h Druckluft von der Wasserbad-Verdampfungsvorrichtung 62 dem dritten Wärmetauscher 64 zugeführt. Hierbei beträgt die Temperaturdifferenz zwischen eingeführter flüssiger Luft und ausgeführter Druckluft 100°C und somit einem Energieeintrag über die Wasserbad-Verdampfungsvorrichtung von ca. 9,5 MWh.

Der Flüssigluftspeicher 18 umfasst beispielsweise ein Volumen von 1.200 m³, was etwa 165 MWh gespeicherter Energie entspricht. Dem Kompressor 26 wird mit dem Motor 24 Energie in Höhe von ca. 20 MW zugeführt, um die angesaugte Luft zu komprimieren. Über den zweiten Wärmetauscher 32 wird eine Wärmeenergie abgegeben, welche über den zweiten Fluidkreislauf 38 über das in der zweiten Wärmeleitung 36 fließende Fluid an die Wasserbad-Verdampfungsvorrichtung 62 abgegeben wird.

Über die Turbine 76 mit angeschlossenem Generator 48 kann während des Betriebs der Flüssigluft-Energiespeicher- und Kraftwerks-Vorrichtung 12 Energie erzeugt werden, welche dem Stromnetz 22 zugeführt wird.

Durch das vielfältige Portfolio von Kompressoren, Getrieben und Generatoren sind die detaillierten Spezifikationen erst in der Planungsphase festzulegen oder anzupassen.

### Bezugszeichenliste

- 10: System
- 12: Flüssigluft-Energiespeicher- und Kraftwerks-Vorrichtung
- 14: Vorrichtung zur permanenten Wasserelektrolyse
- 16: Ladekomponente
- 18: Flüssigluftspeicher
- 20: Entladekomponente
- 22: Stromnetz
- 24: Elektromotor
- 26: Kompressor
- 28: Luftansaugfilter
- 30: Luftleitung
- 32: zweiter Wärmetauscher, der in der Ladekomponente 16 angeordnet ist
- 34: Trockner
- 36: Wärmeleitung, zweite Wärmeleitung
- 38: Fluidkreislauf, zweiter Fluidkreislauf
- 40: Luftverflüssiger
- 42: Wärmetauscher
- 44: Regulierventil
- 46: Expansionsturbine
- 48: Bremsgenerator
- 50: Entspannungsventil
- 52: Ausgleichsbehälter
- 54: elektrische Schaltzentrale
- 56: weiteres Regulierventil vor dem Luftspeicher 18
- 58: Pumpe
- 60: Motor der Pumpe 58
- 62: Wasserbad-Verdampfungsvorrichtung
- 64: dritter Wärmetauscher
- 66: Druckluft-Pufferbehälter
- 68: erste Wärmeleitung
- 70: Bypassleitung
- 72: Bypassventil
- 74: Druckluftventil
- 76: Hauptturbine
- 78: Stromgenerator
- 80: Elektrolyseur
- 86: Sauerstoff-Speicherbehälter
- 88: Wasserstoff-Speicherbehälter
- 90: Fluidkreislauf - Sauerstoff
- 92: Fluidkreislauf - Wasserstoff
- 94: Wärmetauscher - Sauerstoff
- 96: Wärmetauscher - Wasserstoff
- 98: erster Fluidkreislauf
- 100: Bypassleitung
- 102: Bypassventil
- 104: Ausgleichsleitung
- 106: Ausgleichsventil

## Patentansprüche

1. System (10) mit
a. einer Flüssigluft-Energiespeicher- und Kraftwerks-Vorrichtung (12) mit
i. einer Ladekomponente (16) umfassend einen Kompressor (26) zur Komprimierung von zugeführter Luft sowie einen sich daran anschließenden Verflüssiger (40) zum Verflüssigen der Luft,
ii. einer Speicherkomponente umfassend einen Luftspeicher (18) zum Speichern der verflüssigten Luft, und
iii. einer Entladekomponente (20) umfassend eine Verdampfungsvorrichtung (62) zur Umwandlung von flüssiger Luft in gasförmige Druckluft, sowie eine Expansionsvorrichtung zur Entspannung der Druckluft mit einer Turbine (76) und mit einem an die Turbine (76) angeschlossenen Generator (78), wobei der Entladekomponente (20) über eine erste Wärmeleitung (68) Wärmeenergie zugeführt wird,
**gekennzeichnet durch**
b. eine Vorrichtung zur permanenten Wasserelektrolyse (14) mit zumindest einem ersten Wärmetauscher (94, 96), über den die bei der Elektrolyse entstehende Wärmeenergie durch ein durch den ersten Wärmetauscher (94, 96) strömendes Fluid aufgenommen wird, wobei der erste Wärmetauscher (94, 96) mit der ersten Wärmeleitung (68) so verbunden ist, dass die bei der Elektrolyse entstehende Wärmeenergie über den ersten Wärmetauscher (94, 96) über das Fluid abgeführt sowie über die erste Wärmeleitung (68) Wärmeenergie der Verdampfungsvorrichtung (62) zugeführt wird, wobei das Fluid eine Temperatur von 40 °C bis 90 °C bei der Verdampfungsvorrichtung (62) aufweist.

2. System nach Anspruch 1, **dadurch gekennzeichnet, dass** zwei erste Wärmetauscher (94, 96) vorgesehen sind, wobei ein erster Wärmetauscher (94) der Sauerstoffgewinnung und ein weiterer erster Wärmetauscher (96) der Wasserstoffgewinnung in der Vorrichtung zur permanenten Wasserelektrolyse (14) zugeordnet ist.

3. System nach Anspruch 1 oder 2, **dadurch gekennzeichnet, dass** die Vorrichtung zur permanenten Wasserelektrolyse (14) als Protonen-Austausch-Membran-Elektrolyseur oder alkalischer Elektrolyseur ausgebildet ist.

4. System nach einem der vorangehenden Ansprüche, **dadurch gekennzeichnet, dass** der Kompressor (26) der Ladekomponente (16) mit zumindest einem zweiten Wärmetauscher (32) zusammenwirkt, dessen den zweiten Wärmetauscher (32) durchströmendes Fluid die beim Komprimieren der Luft entstehende Wärmeenergie aufnimmt und abführt.

5. System nach Anspruch 4, **dadurch gekennzeichnet, dass** der zweite Wärmetauscher (32) über eine zweite Wärmeleitung (36) mit der Verdampfungsvorrichtung (62) verbunden ist, um die beim Komprimieren entstehende Wärmeenergie der Verdampfungsvorrichtung (62) zuzuführen.

6. System nach einem der vorangehenden Ansprüche, **dadurch gekennzeichnet, dass** der Verdampfungsvorrichtung (62) zumindest ein dritter Wärmetauscher (64) nachgeschaltet ist, über den der Druckluft aus der Verdampfungsvorrichtung (62) weiter Wärmeenergie zugeführt und die erforderliche Temperatur der Druckluft eingestellt werden.

7. System nach Anspruch 6, **dadurch gekennzeichnet, dass** die Verdampfungsvorrichtung (62) über die erste Wärmeleitung (68) und/oder zweite Wärmeleitung (36) mit dem dritten Wärmetauscher (64) verbunden ist und die verbleibende Wärmeenergie des aus der Verdampfungsvorrichtung (62) austretenden Fluids nutzt, um die Temperatur der Druckluft über den dritten Wärmetauscher (64) einzustellen.

8. System nach einem der Ansprüche 6 oder 7, **dadurch gekennzeichnet, dass** der dritte Wärmetauscher (64) mit dem ersten Wärmetauscher (94, 96) über die erste Wärmeleitung (68) verbunden ist und einen ersten Fluidkreislauf (98) bildet.

9. System nach Anspruch 4 und 6 **dadurch gekennzeichnet, dass** der dritte Wärmetauscher (64) mit dem zweiten Wärmetauscher (32) über die zweite Wärmeleitung (36) verbunden ist und einen zweiten Fluidkreislauf (38) bildet.

10. System nach einem der vorangehenden Ansprüche, **dadurch gekennzeichnet, dass** ein Druckluft-Pufferbehälter (66) in der Entladekomponente (20) der Flüssigluft-Energiespeicher- und Kraftwerks-Vorrichtung (12) vorgesehen ist.

11. System nach Anspruch 10 **dadurch gekennzeichnet, dass** der dritte Wärmetauscher (64) dem Druckluft-Pufferbehälter (66) vorgeschaltet ist.

12. Verfahren zum Betreiben eines Systems (10) umfassend eine Flüssigluft-Energiespeicher- und Kraftwerks-Vorrichtung (12) und eine Vorrichtung zur permanenten Wasserelektrolyse (14), nach einem der vorangehenden Ansprüche, bei der die Wärmeenergie der Abwärme der Vorrichtung zur permanenten Wasserelektrolyse (14) genutzt wird, um diese einer Verdampfungsvorrichtung (62) einer Entladekomponente (20) der Flüssigluft-Energiespeicher- und Kraftwerks-Vorrichtung (12) für die Umwandlung von verflüssigter in gasförmige Druckluft zuzuführen.

13. Verfahren nach Anspruch 12, **dadurch gekennzeichnet, dass** die Wärmeenergie der Abwärme eines Elektrolyseurs (80) von der Vorrichtung zur permanenten Wasserelektrolyse (14) verwendet wird.

14. Verfahren nach Anspruch 12 oder 13, **dadurch gekennzeichnet, dass** zusätzlich die Wärmeenergie eines Kompressors (26) zur Komprimierung von zugeführter Luft einer Ladekomponente (16) der Flüssigluft-Energiespeicher- und Kraftwerks-Vorrichtung (12) genutzt wird, um diese der Verdampfungsvorrichtung (62) der Entladekomponente (20) der Flüssigluft-Energiespeicher- und Kraftwerks-Vorrichtung (12) für die Umwandlung von verflüssigter in gasförmige Druckluft zuzuführen.

15. Verfahren nach einem der Ansprüche 12 bis 14, **dadurch gekennzeichnet, dass** die Wärmeenergie permanent der Verdampfungsvorrichtung (62) der Entladekomponente (20) über die erste Wärmeleitung (68) zugeführt wird, und in der Verdampfungsvorrichtung (62) bei Bedarf verflüssigte in gasförmige Luft umgewandelt und einem Druckluft-Pufferspeicher (66) zugeführt wird.

## Claims

1. System (10) comprising:
a. a liquid air energy storage and power plant apparatus (12) having
i. a charging component (16) comprising a compressor (26) for compressing supplied air and comprising a liquefier (40), which adjoins said compressor and which serves for liquefying the air,
ii. a storage component comprising an air storage (18) for storing the liquefied air, and
iii. a discharging component (20) comprising an evaporation apparatus (62) for converting liquid air into gaseous compressed air, and comprising an expansion apparatus which serves for expanding the compressed air and which has a turbine (76) and a generator (78) which is connected to the turbine (76), wherein heat energy is supplied to the evaporation apparatus (62) via a first heat line (68);
**characterized by**
b. an apparatus (14) for permanent water electrolysis having at least one first heat exchanger (94, 96), by means of which the heat energy generated during electrolysis is absorbed by a fluid flowing through the first heat exchanger (94, 96), which first heat exchanger (94, 96) is connected to the first heat line (68) in such a way that the heat energy generated during electrolysis is dissipated via the first heat exchanger (94, 96) by means of the fluid as well as that heat energy is fed to the evaporation apparatus (62) via the first heat line (68), wherein the temperature of the fluid is between 40°C and 90°C in the evaporation apparatus (62).

2. System according to claim 1, **characterized in that** two first heat exchangers (94, 96) are provided, of which one first heat exchanger (94) is associated with oxygen recovery and the other first heat exchanger (96) is associated with hydrogen recovery in the apparatus (14) for permanent water electrolysis.

3. System according to any one of claims 1 or 2 above, **characterized in that** the apparatus (14) for permanent water electrolysis is designed as a proton exchange membrane (PEM) electrolyzer or an alkaline electrolyzer.

4. System according to any one of the preceding claims, **characterized in that** the compressor (26) of the charging component (16) cooperates with at least a second heat exchanger (32), the fluid of which flowing through the second heat exchanger (32) absorbs and dissipates the heat energy generated during compression of the air.

5. System according to claim 4, **characterized in that** the second heat exchanger (32) is connected to the evaporation apparatus (62) via a second heat line (36) in order to supply the heat energy generated during compression to the evaporation apparatus (62).

6. System according to any one of the preceding claims, **characterized in that** at least one third heat exchanger (64) is connected downstream of the evaporation apparatus (62), which third heat exchanger (64) is used to supply further thermal energy to the compressed air from the evaporation apparatus (62) and to set the required temperature of the compressed air.

7. System according to claim 6, **characterized in that** the evaporation apparatus (62) is connected to the third heat exchanger (64) via the first heat line (68) and/or the second heat line (36) and uses the remaining heat energy of the fluid exiting the evaporation apparatus (62) to set the temperature of the compressed air via the third heat exchanger (64).

8. System according to any one of claims 6 or 7 above, **characterized in that** the third heat exchanger (64) is connected to the first heat exchanger (94, 96) via the first heat line (68) and forms a first fluid circuit (98).

9. System according to any one of claims 4 and 6 above, **characterized in that** the third heat exchanger (64) is connected to the second heat exchanger (32) via the second heat line (36) and forms a second fluid circuit (38).

10. System according to any one of the preceding claims, **characterized in that** a compressed air buffer tank (66) is provided in the discharging component (20) of the liquid air energy storage and power plant apparatus (12).

11. System according to claim 10, **characterized in that** the third heat exchanger (64) is connected upstream of the compressed air buffer tank (66).

12. Method of operating a system (10) comprising a liquid air energy storage and power plant apparatus (12) and an apparatus (14) for permanent water electrolysis, of the type specified in any one of the preceding claims, in which the thermal energy of the waste heat of the apparatus (14) for permanent water electrolysis is used to supply it to an evaporation apparatus (62) of a discharging component (20) of the liquid air energy storage and power plant apparatus (12) for the conversion of liquefied air into gaseous compressed air.

13. Method according to claim 12, **characterized in that** the heat energy of the waste heat of an electrolyzer (80) is used by the apparatus (14) for permanent water electrolysis.

14. Method according to any one of claims 12 or 13 above, **characterized in that** additionally the thermal energy of a compressor (26) is used for compressing supplied air of a charging component (16) of the liquid air energy storage and power plant apparatus (12) in order to supply it to the evaporation apparatus (62) of the discharging component (20) of the liquid air energy storage and power plant apparatus (12) for the conversion of liquefied air into gaseous compressed air.

15. Method according to any one of claims 12 to 14 above, **characterized in that** the thermal energy is constantly supplied to the evaporation apparatus (62) of the discharging component (20) via the first heat line (68), and liquefied air is converted into gaseous air in the evaporation apparatus (62) as required and supplied to a compressed air buffer storage (66).

## Revendications

1. Système (10) comprenant
a. un dispositif de centrale et accumulateur d'énergie à air liquide (12) avec
i. une composante de charge (16) comprenant un compresseur (26) pour la compression d'un air fourni ainsi qu'un condenseur (40) s'y raccordant pour la liquéfaction de l'air,
ii. une composante d'accumulation comprenant un accumulateur d'air (18) pour l'accumulation de l'air liquéfié, et
iii. une composante de décharge (20) comprenant un dispositif de vaporisation (62) pour la conversion d'un air liquide en un air comprimé sous forme de gaz, ainsi qu'un dispositif d'expansion pour la détente de l'air comprimé avec une turbine (76) et avec un générateur (78) raccordé à la turbine (76), dans lequel une énergie thermique est fournie à la composante de décharge (20) via une première conduite thermique (68),
**caractérisé par**
b. un dispositif pour l'électrolyse de l'eau (14) permanente avec au moins un premier échangeur thermique (94, 96) via lequel l'énergie thermique produite dans le cadre de l'électrolyse est prise en charge par un fluide s'écoulant à travers le premier échangeur thermique (94, 96), dans lequel le premier échangeur thermique (94, 96) est relié à la première conduite thermique (68) de sorte que l'énergie thermique produite lors de l'électrolyse soit évacuée via le fluide via le premier échangeur thermique (94, 96) et qu'une énergie thermique soit fournie au dispositif de vaporisation (62) via la première conduite thermique (68), dans lequel le fluide présente une température de 40° C à 90° C au niveau du dispositif de vaporisation (62).

2. Système selon la revendication 1, **caractérisé en ce que** deux premiers échangeurs thermiques (94, 96) sont prévus, dans lequel un premier échangeur thermique (94) est attribué à la récupération d'oxygène et un autre premier échangeur thermique (96) est attribué à la récupération d'hydrogène dans le dispositif pour l'électrolyse de l'eau (14) permanente.

3. Système selon la revendication 1 ou 2, **caractérisé en ce que** le dispositif pour l'électrolyse de l'eau (14) permanente est conçu en tant qu'électrolyseur à membrane échangeuse de protons ou électrolyseur alcalin.

4. Système selon l'une des revendications précédentes, **caractérisé en ce que** le compresseur (26) de la composante de charge (16) coopère avec au moins un deuxième échangeur thermique (32) dont le fluide s'écoulant à travers le deuxième échangeur thermique (32) prend en charge et évacue l'énergie thermique produite lors de la compression de l'air.

5. Système selon la revendication 4, **caractérisé en ce que** le deuxième échangeur thermique (32) est relié au dispositif de vaporisation (62) via une seconde conduite thermique (36) pour fournir au dispositif de vaporisation (62) l'énergie thermique produite dans le cadre de la compression.

6. Système selon l'une des revendications précédentes, **caractérisé en ce qu'**après le dispositif de vaporisation (62) est monté au moins un troisième échangeur thermique (64), via lequel de l'énergie thermique continue d'être fournie à l'air comprimé depuis le dispositif de vaporisation (62) et la température requise de l'air comprimé est réglée.

7. Système selon la revendication 6, **caractérisé en ce que** le dispositif de vaporisation (62) est relié au troisième échangeur thermique (64) via la première conduite thermique (68) et/ou la seconde conduite thermique (36), et l'énergie thermique restante du fluide sortant du dispositif de vaporisation (62) sert à régler la température de l'air comprimé via le troisième échangeur thermique (64).

8. Système selon l'une des revendications 6 ou 7, **caractérisé en ce que** le troisième échangeur thermique (64) est relié au premier échangeur thermique (94, 96) via la première conduite thermique (68) et forme un premier circuit de fluide (98).

9. Système selon la revendication 4 et 6, **caractérisé en ce que** le troisième échangeur thermique (64) est relié au deuxième échangeur thermique (32) via la seconde conduite thermique (36) et forme un second circuit de fluide (38).

10. Système selon l'une des revendications précédentes, **caractérisé en ce qu'**un réservoir tampon d'air comprimé (66) est prévu dans la composante de décharge (20) du dispositif de centrale et accumulateur d'énergie à air liquide (12).

11. Système selon la revendication 10, **caractérisé en ce que** le troisième échangeur thermique (64) est monté avant le réservoir tampon d'air comprimé (66).

12. Procédé d'exploitation d'un système (10) comprenant un dispositif de centrale et accumulateur d'énergie à air liquide (12) et un dispositif pour l'électrolyse de l'eau (14) permanente, selon l'une des revendications précédentes, dans le cadre duquel l'énergie thermique de la chaleur résiduelle du dispositif pour l'électrolyse de l'eau (14) permanente est utilisée pour fournir celle-ci à un dispositif de vaporisation (62) d'une composante de décharge (20) du dispositif de centrale et accumulateur d'énergie à air liquide (12) pour la conversion d'un air comprimé liquéfié en un air comprimé sous forme de gaz.

13. Procédé selon la revendication 12, **caractérisé en ce qu'**est employée l'énergie thermique de la chaleur résiduelle d'un électrolyseur (80) du dispositif pour l'électrolyse de l'eau (14) permanente.

14. Procédé selon la revendication 12 ou 13, **caractérisé en ce qu'**en outre est utilisée l'énergie thermique d'un compresseur (26) pour la compression d'un air fourni d'une composante de charge (16) du dispositif de centrale et accumulateur d'énergie à air liquide (12) afin de fournir celle-ci au dispositif de vaporisation (62) de la composante de décharge (20) du dispositif de centrale et accumulateur d'énergie à air liquide (12) pour la conversion d'un air comprimé liquéfié en un air comprimé sous forme de gaz.

15. Procédé selon l'une des revendications 12 à 14, **caractérisé en ce que** l'énergie thermique est fournie en permanence au dispositif de vaporisation (62) de la composante de décharge (20) via la première conduite thermique (68), et dans le dispositif de vaporisation (62) en fonction des besoins un air liquéfié est converti en un air sous forme de gaz et fourni à un réservoir tampon d'air comprimé (66).
